# EUROPEAN PATENT SPECIFICATION

(11) **EP 4 575 681 B1**
(45) Date of publication and mention of the grant of the patent: **04.11.2026**
(21) Application number: 23855028.9
(22) Date of filing: 29.06.2023
(51) Int. Cl.: H01M 10/04, G05B 13/02, G05B 19/418, G05B 23/02, G01B 7/16, H01M 10/48

(54) **SYSTEM FOR MANAGING BATTERY MANUFACTURING PROCESS AND METHOD FOR OPERATING SAME**
SYSTEM ZUR VERWALTUNG EINES BATTERIEHERSTELLUNGSVERFAHRENS UND VERFAHREN ZUM BETRIEB DAVON
SYSTÈME DE GESTION DE PROCESSUS DE FABRICATION DE BATTERIE ET SON PROCÉDÉ DE FONCTIONNEMENT

(30) Priority: 17.08.2022 KR 20220102999
(43) Date of publication of application: 25.06.2025
(73) Proprietor: LG Energy Solution, Ltd., Seoul 07335 (KR)
(72) Inventor: SONG, Hyeon Jin, Daejeon 34122 (KR)
(74) Representative: Goddar, Heinz J.
(86) International application number: PCT/KR2023/009170
(87) International publication number: WO 2024/039057

(56) References cited:
- WO-A1-2021/171162
- WO-A1-2022/080209
- JP-A- 2019 102 186
- KR-A- 20020 093 979
- KR-A- 20120 121 488
- KR-A- 20170 070 112
- US-A1- 2021 381 910

## Description

### [TECHNICAL FIELD]

Embodiments disclosed herein relate to a battery manufacturing process management system and an operating method thereof.

### [BACKGROUND ART]

Recently, research and development of secondary batteries have been actively performed. Secondary batteries, which are chargeable/dischargeable batteries, may include all of conventional nickel (Ni)/cadmium (Cd) batteries, Ni/metal hydride (MH) batteries, etc., and recent lithium-ion batteries. Among them, a lithium-ion battery has a much higher energy density than those of conventional Ni/Cd batteries, Ni/MH batteries, etc. Moreover, the lithium-ion battery may be manufactured to be small and lightweight, such that the lithium-ion battery has been used as a power source of mobile devices, and recently, a use range thereof has been extended to power sources for electric vehicles, attracting attention as next-generation energy storage media.

WO 2022/080209 A1 relates to a sensor unit to be put into a battery manufacturing facility and a method for inspecting a battery manufacturing facility using the sensor unit.

A battery cell, which is the basic unit constituting a battery pack and/or module, includes an anode, a cathode, and a separator. Each battery cell is manufactured through an electrode assembly process, a degassing process, an activation process, a charge/discharge process, an aging process, etc., and performance or completion level of the battery cell may vary depending on process variables such as a pressure applied to the battery cell by pressurization equipment, a temperature inside a chamber, charge/discharge conditions of the battery cell, a leaving period, etc. Conventionally, setting of the process variables highly depends on experiences of technicians, it is difficult to know in advance an influence on the performance or completion level of battery cell products when manufacturing equipment is replaced or equipment settings or conditions are changed.

### [DISCLOSURE]

### [TECHNICAL PROBLEM]

Embodiments disclosed herein aim to provide a battery manufacturing process management system which may appropriately control process variables by obtaining data about a battery manufacturing process using a battery cell dummy including a sensor.

Embodiments disclosed herein aim to improve performance degradation and defects of a battery cell and reduce a risk originating from a failure by providing a feedback to a user based on a database established for a manufacturing process of a battery.

Technical problems of the embodiments disclosed herein are not limited to the above-described technical problems, and other unmentioned technical problems would be clearly understood by one of ordinary skill in the art from the following description.

### [TECHNICAL SOLUTION]

A battery manufacturing process management system according to an embodiment includes a battery cell dummy configured to obtain data regarding a battery manufacturing process and a controller configured to control at least one process variable related to the battery manufacturing process based on the data regarding the battery manufacturing process, obtained using the battery cell dummy.

In the battery manufacturing process management system according to an embodiment, the data regarding the battery manufacturing process may include at least one of a pressure applied to the battery cell dummy, an internal or external temperature of the battery cell dummy, an internal gas volume of the battery cell dummy, and a deformation level of the battery cell dummy.

In the battery manufacturing process management system according to an embodiment, the battery cell dummy may include at least one of a pressure sensor configured to measure the pressure applied to the battery cell dummy, a temperature sensor configured to sense the internal or external temperature of the battery cell dummy, a gas volume sensor configured to measure the internal gas volume of the battery cell dummy, and a strain gauge configured to sense deformation of the battery cell dummy.

In the battery manufacturing process management system according to an embodiment, the pressure sensor and the temperature sensor may be pad-type sensors included in the battery cell dummy, and the strain gauge may be a film-type sensor attached to a surface of the battery cell dummy.

In the battery manufacturing process management system according to an embodiment, the controller may be further configured to optimize the at least one process variable based on the data obtained using the battery cell dummy.

In the battery manufacturing process management system according to an embodiment, the at least one process variable may include at least one of setting of pressurization equipment, a chamber internal temperature, a battery storage period, and a battery charge/discharge condition.

In the battery manufacturing process management system according to an embodiment, the controller may be further configured to transmit an alert message to a user based on a difference between the data obtained using the battery cell dummy and the previously stored reference data.

A battery manufacturing process management method according to an embodiment may include obtaining data regarding a battery manufacturing process using a battery cell dummy and controlling at least one process variable related to the battery manufacturing process based on the data regarding the battery manufacturing process, obtained using the battery cell dummy.

In the battery manufacturing process management method according to an embodiment, the data regarding the battery manufacturing process may include at least one of a pressure applied to the battery cell dummy, an internal or external temperature of the battery cell dummy, an internal gas volume of the battery cell dummy, and a deformation level of the battery cell dummy.

In the battery manufacturing process management method according to an embodiment, the obtaining of the data regarding the battery manufacturing process using the battery cell dummy may include measuring the pressure applied to the battery cell dummy, sensing the internal or external temperature of the battery cell dummy, measuring the internal gas volume of the battery cell dummy, and sensing deformation of the battery cell dummy.

In the battery manufacturing process management method according to an embodiment, at least one of the measuring of the pressure, the sensing of the temperature, and the measuring of the internal gas volume may be performed using a pad-type sensor included in the battery cell dummy, and the sensing of the deformation of the battery cell dummy may be performed using a film-type sensor attached to a surface of the battery cell dummy.

In the battery manufacturing process management method according to an embodiment, the controlling of the at least one process variable may include optimizing the at least one process variable based on the data obtained using the battery cell dummy.

In the battery manufacturing process management method according to an embodiment, the at least one process variable may include at least one of setting of pressurization equipment, a chamber internal temperature, a battery storage period, and a battery charge/discharge condition.

The battery manufacturing process management method according to an embodiment may further include transmitting an alert message to a user based on a difference between the data obtained using the battery cell dummy and the previously stored reference data.

### [ADVANTAGEOUS EFFECTS]

According to an embodiment, by previously putting a battery cell dummy including a sensor into a battery manufacturing process, data (e.g., a pressure applied to a cell, a temperature, a gas volume, a deformation level, etc.) regarding a process may be obtained and a process database may be established based on the data.

According to an embodiment, by calculating optimal process variables (e.g., setting of pressurization equipment, a chamber temperature, charge/discharge conditions, etc.) and controlling process variables in a battery manufacturing process, a risk associated with equipment replacement or new process line installation may be minimized.

According to an embodiment, by providing a feedback to the user based on the established database, performance degradation and defects of the battery cell due to the process variables may be prevented and improved.

Moreover, various effects recognized directly or indirectly from the disclosure may be provided.

### [DESCRIPTION OF DRAWINGS]

In order to more clearly describe technical solutions of embodiments disclosed herein or the prior art, the drawings required in the description of the embodiments are briefly introduced below. It should be understood that the following drawings are for the purpose of explaining the embodiments of the present specification and not for limiting purposes. In addition, representations of some components in the drawings may be exaggerated or omitted for clarity of explanation.
FIG. 1 shows a configuration of a battery manufacturing process management system according to an embodiment.
FIG. 2A is a side view of a battery cell dummy according to an embodiment.
FIG. 2B is a plane view of a battery cell dummy according to an embodiment.
FIG. 3 shows a flow of a battery manufacturing process management method according to an embodiment.
FIG. 4 shows in detail an operation of obtaining data in a battery manufacturing process management method according to an embodiment.
FIG. 5 shows a flow of a battery manufacturing process management method according to an embodiment.
FIG. 6 shows a computing system that executes a battery manufacturing process management method according to an embodiment.

### [MODE FOR INVENTION]

Hereinafter, embodiments disclosed in this document will be described in detail with reference to the exemplary drawings. In adding reference numerals to components of each drawing, it should be noted that the same components are given the same reference numerals even though they are indicated in different drawings. In addition, in describing the embodiments disclosed in this document, when it is determined that a detailed description of a related known configuration or function interferes with the understanding of an embodiment disclosed in this document, the detailed description thereof will be omitted.

Although terms used herein are selected with general terms popularly used at present under the consideration of functions in the disclosure, the terms may vary according to the intention of those of ordinary skill in the art, custom, or introduction of new technology. In addition, in a specific case, the applicant voluntarily may select terms, and in this case, the meaning of the terms may be disclosed in a corresponding description part of the present specification. Therefore, the terms used herein should be defined not by the simple names of the terms but by the substantial meaning of the terms and the contents throughout the disclosure.

Terms defined in the present disclosure are used for only describing a specific exemplary embodiment and may not have an intention to limit the scope of other exemplary embodiments. It is to be understood that the singular forms include plural references unless the context clearly dictates otherwise. Herein, expressions such as "first" and "second" are used to distinguish components from each other, and do not mean a rank or order among components.

All components constituting the embodiment have been described as being combined or operating in combination, but it is not necessarily limited to this embodiment, and within the scope of the purpose, all components may be selectively combined with one or more to operate. Moreover, terms such as "include", "constitute", "have", etc., described herein may mean that the corresponding component may be inherent unless otherwise stated, and thus should be construed as further including other components rather than excluding other components.

Moreover, components shown in the block diagram are classified depending on their functions and roles, and each block does not necessarily have to be implemented as independent hardware or software. For example, separated components may be actually implemented as one device or program, or one component may be implemented as a combination of several devices and programs.

Hereinbelow, preferred embodiments of a battery manufacturing process management system and an operating method thereof will be described with reference to the drawings.

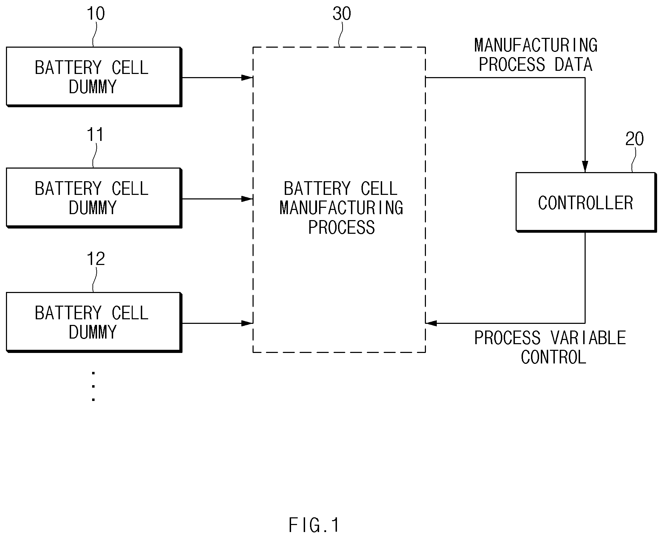

FIG. 1 shows a configuration of a battery manufacturing process management system according to an embodiment.

Referring to FIG. 1, a battery manufacturing process management system according to an embodiment may include battery cell dummies 10, 11, 12, ..., for obtaining data regarding a battery manufacturing process and a controller 20 for controlling at least one process variable related to the battery manufacturing process based on the data obtained using the battery cell dummy.

The battery cell dummies 10, 11, 12, ..., may be imitations manufactured with the same specifications (size, specifications, etc.) as an actual battery cell product, and may be put into a battery cell manufacturing process 30 for use to obtain the data regarding the manufacturing process.

A battery cell mentioned herein may be a basic unit forming a battery pack or a battery module. Each battery cell is manufactured through an electrode assembly process, a degassing process, an activation process, a charge/discharge process, an aging process, etc., and performance or completion level of a product may vary depending on process variables (e.g., a pressure applied to the battery cell, a temperature inside a chamber, charge/discharge conditions, etc.). Conventionally, setting of the process variables highly depends on experiences of technicians, it is difficult to know in advance an influence on the performance or completion level of battery cell products when manufacturing equipment is replaced or equipment settings or conditions are changed.

The battery cell dummies 10, 11, 12, ..., may be put into the battery cell manufacturing process 30 and obtain data regarding a battery manufacturing process such as a pressure applied to a battery cell dummy, an internal or external temperature of the battery cell dummy, an internal gas volume of the battery cell dummy, a deformation level of the battery cell dummy, etc., while passing through the same process as an actual battery cell, and the obtained data may be transmitted to the controller 20.

According to an embodiment, the battery cell dummies 10, 11, 12, ..., each may include at least one sensor for obtaining the process-related data. For example, a pressure sensor for measuring the pressure applied to the battery cell dummy, a temperature sensor for sensing an internal or external temperature of the battery cell dummy, a gas volume sensor for measuring a gas volume inside the battery cell dummy, a strain gauge for sensing deformation of the battery cell dummy, etc., may be included in the battery cell dummy or installed on the surface of the battery cell dummy.

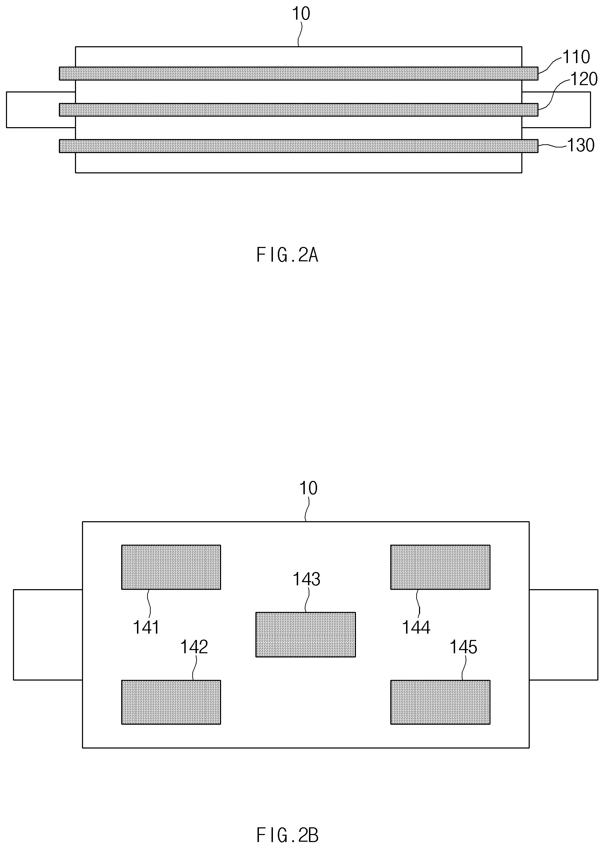

FIG. 2A is a side view of a battery cell dummy according to an embodiment.

As is shown, the battery cell dummy 10 may include at least one pad-type sensors 110, 120, and 130. The sensors 110, 120, and 130 may correspond to a pressure sensor, a temperature sensor, a gas volume sensor, etc., respectively. For example, the pressure sensor 110 may measure a pressure applied to the battery cell dummy 10 from external equipment in a manufacturing process and a pressure applied from an inside due to expansion or deformation of the battery cell dummy 10, the temperature sensor 120 may measure an internal temperature or a temperature of an external environment of the battery cell dummy 10, and the gas volume sensor 130 may sense a gas volume generated inside the battery cell dummy 10.

FIG. 2B is a plane view of a battery cell dummy according to an embodiment.

As is shown, the battery cell dummy 10 may include at least one strain gauges 141 to 145 for sensing deformation of the battery cell dummy 10. According to an embodiment, the strain gauge, which is a device configured to detect a mechanical subtle change as an electric signal, may be a film-type sensor attached to an upper surface of the battery cell dummy 10.

According to an embodiment, the sensors 110, 120, and 130 and the strain gauges 141 to 145 each may transmit measurement data to the controller 20 through a communication unit capable of wireless communication (Bluetooth, Wi-Fi optical communication, RF communication, etc.,) with an external device. Alternatively, a storage device included in the battery cell dummy 10 may collect data obtained by the sensor and transmit the measurement data to the controller 20 through the communication unit. Alternatively, the sensors and the strain gauge may transmit the obtained data to an external device (e.g., a cloud PC, etc.) instead of the controller 20, and the controller 20 may obtain data regarding a battery manufacturing process from the external device through separate communication.

Configurations and positions of the battery cell dummy 10 and the sensor included in the same, shown in FIGS. 2A and 2B, are merely examples, and various sensors (e.g., an image sensor, a magnetic sensor, a current sensor, etc.) not mentioned specifically herein may be used to obtain the process-related data.

Referring back to FIG. 1, the battery cell dummies 10, 11, 12, ..., may be sequentially put into the battery cell manufacturing process 30 and each obtain data (a pressure, a temperature, a gas volume, a deformation level, etc.) regarding a battery manufacturing process. Data obtained using the plurality of battery cell dummies may be stored in a process database through labelling, and may be used by the controller 20 to calculate optimal values for the process variables and control the process variables.

The controller 20 may control at least one process variable based on manufacturing process data of a battery obtained using the battery cell dummies 10, 11, 12, ....

The process variable (or design variable) may be set by a manufacturer in the battery manufacturing process and may affect performance, quality, etc., of the battery. For example, the process variable may include setting of the pressurization equipment, a temperature inside the chamber, a battery storage period/temperature, a battery charge/discharge condition, etc. The process variables affect a state of the manufactured battery cell, and more specifically, setting of the pressurization equipment may affect a pressure applied to a battery cell, an internal temperature of a chamber or a battery storage temperature may affect an internal/external temperature of the battery, and the charge/discharge condition of the battery (charge current/voltage, the number of cycles, a period, etc.) may affect an internal gas volume or temperature of the battery.

According to an embodiment, the controller 20 may optimize at least one process variable based on data of the battery obtained using the battery cell dummies 10, 11, 12, ... For example, an environment (equipment settings, chamber temperature, charge/discharge conditions, etc.) of a manufacturing process of a battery having specific specifications may be optimized to manufacture the battery with desired performance and completion level. Conventionally, in this state, for example, when a process environment changes due to introduction of new equipment, installation of an additional line, a change in an external temperature/humidity, etc., the same process variables are applied or some adjustment is possible depending on the technician's experiences, in spite of a change in the environment, but the optimal result is difficult to obtain as before.

On the other hand, with the battery manufacturing process management system according to an embodiment, the battery cell dummy may be put into the manufacturing process to obtain data after a change in the process environment, and the optimal process variables (e.g., setting for manufacturing the same product as before the change in the environment) may be calculated and applied through comparison with existing process data, thereby obtaining the same process result as before.

According to an embodiment, the controller 20 may transmit an alert message to the user based on a difference between data obtained using the battery cell dummies 10, 11, 12,..., and previously stored reference data. For example, by referring to a setting value of the pressurization equipment, an alert message ("over allowable pressure") may be output to the user when a pressure value applied to a battery cell dummy exceeds an allowable pressure value, thereby preventing a loss occurring in manufacturing of the actual battery cell. In another example, when an internal gas volume or temperature and a deformation level of the battery cell dummy may be compared with allowable gas volume, temperature, and deformation value, respectively, and exceed the allowable values, then the alert message may be output in advance to the user, thereby preventing a loss occurring in manufacturing of the actual battery cell. The alert message may be output by a display device connected to the controller 20.

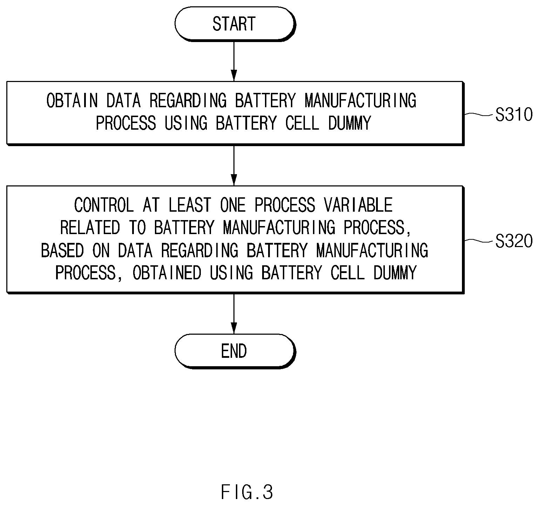

FIG. 3 shows a flow of a battery manufacturing process management method according to an embodiment.

Referring to FIG. 3, in operation S310, data regarding a battery manufacturing process may be obtained using a battery cell dummy. The battery cell dummy may be imitations manufactured with the same specifications (size, specifications, etc.) as an actual battery cell product, and may be put into the battery cell manufacturing process for use to obtain the data regarding the manufacturing process.

According to an embodiment, the data regarding the battery manufacturing process may include at least one of a pressure applied to the battery cell dummy, an internal or external temperature of the battery cell dummy, an internal gas volume of the battery cell dummy, and a deformation level of the battery cell dummy.

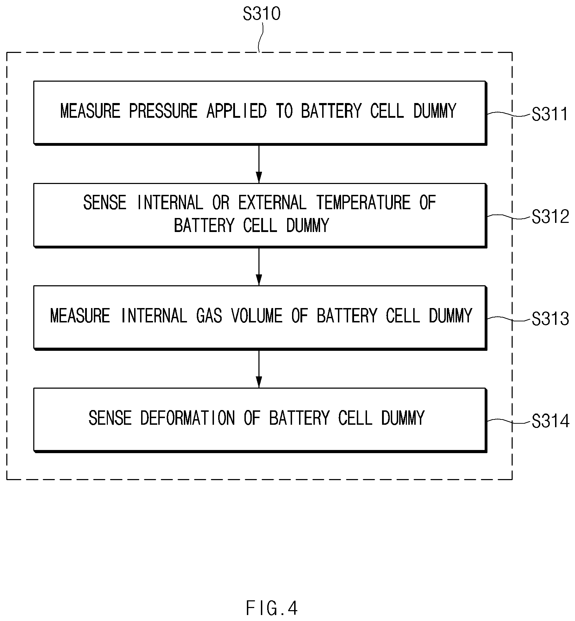

FIG. 4 shows in detail an operation of obtaining data in a battery manufacturing process management method according to an embodiment.

Referring to FIG. 4, operation S310 of obtaining the data regarding the battery manufacturing process may include operation S311 of measuring the pressure applied to the battery cell dummy, operation S312 of sensing an internal or external temperature of the battery cell dummy, operation S313 of measuring an internal gas volume of the battery cell dummy, and operation S314 of sensing deformation of the battery cell dummy. However, operations S311 to S314 may not be simultaneously or sequentially performed, and some thereof may be performed or may be performed in an order different from that shown.

According to an embodiment, at least one of operation S311 to S313 may be performed by a pad-type sensor included in the battery cell dummy (e.g., the pressure sensor 110, the temperature sensor 120, the gas volume sensor 130, etc., of FIG. 2A0, and operation S314 may be performed by a film-type sensor attached to the surface of the battery cell dummy (e.g., the strain gauges 141 to 145, etc., of FIG. 2B).

Referring back to FIG. 3, in operation S320, at least one process variable related to the battery manufacturing process may be controlled based on manufacturing process data obtained using the battery cell dummy. The process variable may be set by a manufacturer in the battery manufacturing process and may affect performance, quality, etc., of the battery. For example, the process variable may include setting of the pressurization equipment, a temperature inside the chamber, a battery storage period/temperature, a battery charge/discharge condition, etc. The process variables affect a state of the manufactured battery cell, and more specifically, setting of the pressurization equipment may affect a pressure applied to a battery cell, an internal temperature of a chamber or a battery storage temperature may affect an internal/external temperature of the battery, and the charge/discharge condition of the battery (charge current/voltage, the number of cycles, a period, etc.) may affect an internal gas volume or temperature of the battery.

According to an embodiment, operation S320 of controlling the at least one process variable may include optimizing the at least one process variable based on the data obtained using the battery cell dummy. On the other hand, when the process environment changes due to introduction of new equipment, installation of an additional line, a change in an external temperature/humidity, etc., the battery cell dummy may be put into the manufacturing process to obtain data, and the optimal process variables (e.g., setting for manufacturing the same product as before the change in the environment) may be calculated and applied through comparison with existing process data, thereby obtaining the same process result as before.

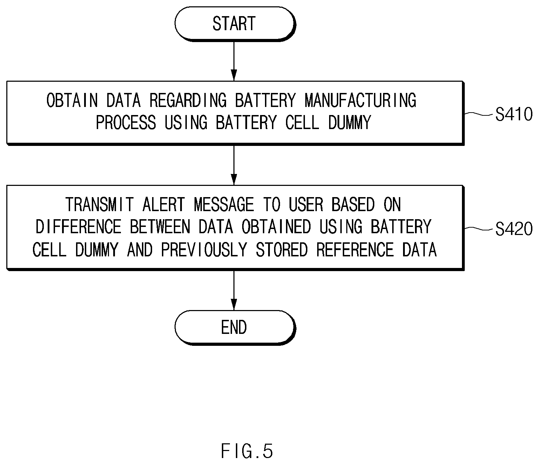

FIG. 5 shows a flow of a battery manufacturing process management method according to an embodiment.

Referring to FIG. 5, in operation S410, data regarding a battery manufacturing process may be obtained using a battery cell dummy. Operation S410 is similar to operation S310 of FIG. 3 and thus will not be described in detail.

In operation S420, an alert message may be transmitted to a user based on a difference between the data obtained using the battery cell dummy and the previously stored reference data. For example, by referring to a setting value of the pressurization equipment, an alert message ("allowable pressure exceeded") may be output to the user when a pressure value applied to a battery cell dummy exceeds an allowable pressure value, thereby preventing a loss occurring in manufacturing of the actual battery cell. In another example, when an internal gas volume or temperature and a deformation level of the battery cell dummy may be compared with allowable gas volume, temperature, and deformation value, respectively, and exceed the allowable values, then the alert message may be output in advance to the user, thereby preventing a loss occurring in manufacturing of the actual battery cell.

The battery manufacturing process management method described with reference to FIGS. 3 to 5 so far may be performed by the battery manufacturing process management system described above, but may also be performed by a device or system having other configurations, without being limited thereto.

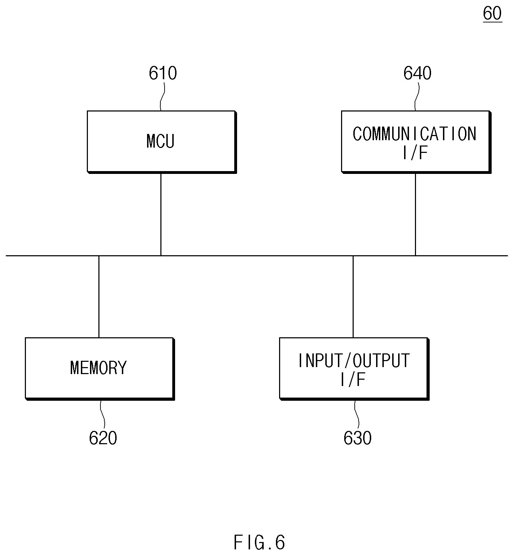

FIG. 6 shows a computing system that executes a battery manufacturing process management method according to an embodiment.

Referring to FIG. 6, a computing system 60 according to an embodiment disclosed herein may include an MCU 610, a memory 620, an input/output I/F 630, and a communication I/F 640.

The MCU 610 may be a processor for executing various programs stored in the memory 620 and executing the above-described battery manufacturing process management method through these programs.

The memory 620 may store various programs related to diagnosis of the battery, etc. The memory 620 may be provided in plural, depending on a need. The memory 620 may include volatile or nonvolatile memory. For the memory 620 as the volatile memory, random access memory (RAM), dynamic RAM (DRAM), static RAM (SRAM), etc., may be used. The memory 620 as the nonvolatile memory may be read only memory (ROM), programmable ROM (PROM), electrically alterable ROM (EAROM), erasable PROM (EPROM), electrically erasable PROM (EEPROM), flash memory, etc. The above-listed examples of the memory 620 are merely examples and are not limited thereto.

The input/output I/F 630 may provide an interface for transmitting and receiving data by connecting an input device (not shown) such as a keyboard, a mouse, a touch panel, etc., and an output device such as a display (not shown), etc., to the MCU 610.

The communication I/F 630, which is a component capable of transmitting and receiving various data to and from a server, may be various devices capable of supporting wired or wireless communication. For example, programs for predicting the remaining life of a battery or learning an artificial neural network or various data may be transmitted and received to and from a separately provided external server through the communication I/F 630.

The battery manufacturing process management method according to the embodiments may be implemented in the form of an application or a program instruction that is executable through various computer components and recorded in a computer-readable recording medium. The computer-readable recording medium may include a program instruction, a data file, a data structure and the like solely or in a combined manner.

With the battery manufacturing process management system and method according to an embodiment described above, by previously putting a battery cell dummy including a sensor into a battery manufacturing process, data (e.g., a pressure applied to a cell, a temperature, a gas volume, a deformation level, etc.) regarding a process may be obtained and a process database may be established based on the data. Moreover, by calculating optimal process variables (e.g., setting of pressurization equipment, a chamber temperature, charge/discharge conditions, etc.) and controlling process variables in a battery manufacturing process, a risk associated with equipment replacement or new process line installation may be minimized. Furthermore, by providing a feedback to the user based on the established database, performance degradation and defects of the battery cell due to the process variables may be prevented and improved.

The above description is merely illustrative of the technical idea of the present disclosure, and various modifications and variations will be possible without departing from the essential characteristics of embodiments of the present disclosure by those of ordinary skill in the art to which the embodiments disclosed herein pertains.

## Claims

1. A battery manufacturing process management system comprising:
a battery cell dummy (10, 11, 12) configured to obtain data regarding a battery manufacturing process; and
a controller (20) configured to control at least one process variable related to the battery manufacturing process (30) based on the data regarding the battery manufacturing process (30), obtained using the battery cell dummy (10, 11, 12).

2. The battery manufacturing process management system of claim 1, wherein the data regarding the battery manufacturing process (30) comprises at least one of a pressure applied to the battery cell dummy (10, 11, 12), an internal or external temperature of the battery cell dummy (10, 11, 12), an internal gas volume of the battery cell dummy (10, 11, 12), and a deformation level of the battery cell dummy (10, 11, 12).

3. The battery manufacturing process management system of claim 2, wherein the battery cell dummy (10, 11, 12) comprises at least one of:
a pressure sensor (110) configured to measure the pressure applied to the battery cell dummy (10, 11, 12);
a temperature sensor (120) configured to sense the internal or external temperature of the battery cell dummy (10, 11, 12);
a gas volume sensor (130) configured to measure the internal gas volume of the battery cell dummy (10, 11, 12); and
a strain gauge (141, 142, 143, 144, 145) configured to sense deformation of the battery cell dummy (10, 11, 12).

4. The battery manufacturing process management system of claim 3, wherein the pressure sensor (110) and the temperature sensor (120) are pad-type sensors included in the battery cell dummy (10, 11, 12), and
the strain gauge is a film-type sensor (141, 142, 143, 144, 145) attached to a surface of the battery cell dummy (10, 11, 12).

5. The battery manufacturing process management system of claim 1, wherein the controller (20) is further configured to optimize the at least one process variable based on the data obtained using the battery cell dummy (10, 11, 12).

6. The battery manufacturing process management system of claim 5, wherein the at least one process variable comprise at least one of setting of pressurization equipment, a chamber internal temperature, a battery storage period, and a battery charge/discharge condition.

7. The battery manufacturing process management system of claim 5, wherein the controller (20) is further configured to transmit an alert message to a user based on a difference between the data obtained using the battery cell dummy (10, 11, 12) and the previously stored reference data.

8. A battery manufacturing process management method comprising:
obtaining (S310) data regarding a battery manufacturing process (30) using a battery cell dummy (10, 11, 12); and
controlling at least one process variable related to the battery manufacturing process (30) based on the data regarding the battery manufacturing process (30), obtained (S310) using the battery cell dummy (10, 11, 12).

9. The battery manufacturing process management method of claim 8, wherein the data regarding the battery manufacturing process (30) comprises at least one of a pressure applied to the battery cell dummy (10, 11, 12), an internal or external temperature of the battery cell dummy (10, 11, 12), an internal gas volume of the battery cell dummy (10, 11, 12), and a deformation level of the battery cell dummy (10, 11, 12).

10. The battery manufacturing process management method of claim 9, wherein the obtaining (S310, S410) of the data regarding the battery manufacturing process (30) using the battery cell dummy (10, 11, 12) comprises:
measuring the pressure (S311) applied to the battery cell dummy (10, 11, 12);
sensing the internal or external temperature (S312) of the battery cell dummy (10, 11, 12);
measuring the internal gas volume (S313) of the battery cell dummy (10, 11, 12); and
sensing deformation (S314) of the battery cell dummy (10, 11, 12).

11. The battery manufacturing process management method of claim 10, wherein at least one of the measuring of the pressure (S311), the sensing of the temperature (S312), and the measuring of the internal gas volume (S313) is performed using a pad-type sensor (110, 120, 130) included in the battery cell dummy (10, 11, 12), and
the sensing of the deformation (S314) of the battery cell dummy (10, 11, 12) is performed using a film-type sensor (141, 142, 143, 144, 145) attached to a surface of the battery cell dummy (10, 11, 12).

12. The battery manufacturing process management method of claim 8, wherein the controlling (S320) of the at least one process variable comprises optimizing the at least one process variable based on the data obtained (S310) using the battery cell dummy (10, 11, 12).

13. The battery manufacturing process management method of claim 12, wherein the at least one process variable comprises at least one of setting of pressurization equipment, a chamber internal temperature, a battery storage period, and a battery charge/discharge condition.

14. The battery manufacturing process management method of claim 12, further comprising transmitting (S420) an alert message to a user based on a difference between the data obtained (S310, S410) using the battery cell dummy (10, 11, 12) and the previously stored reference data.

## Patentansprüche

1. Regelungssystem für ein Batterieherstellungsverfahren, umfassend:
einen Batteriezellen-Dummy (10, 11, 12), der dazu ausgelegt ist, Daten bezüglich eines Batterieherstellungsverfahrens zu sammeln; und
eine Steuerung (20), die dazu ausgelegt ist, wenigstens eine Prozessvariable, die sich auf das Batterieherstellungsverfahren (30) bezieht, basierend auf den Daten bezüglich des Batterieherstellungsverfahrens (30), die unter Verwendung des Batteriezellen-Dummys (10, 11, 12) gesammelt werden, zu steuern.

2. Regelungssystem für ein Batterieherstellungsverfahren nach Anspruch 1, wobei die Daten bezüglich des Batterieherstellungsverfahrens (30) einen Druck, der auf den Batteriezellen-Dummy (10, 11, 12) ausgeübt wird, eine interne oder externe Temperatur des Batteriezellen-Dummys (10, 11, 12), ein internes Gasvolumen des Batteriezellen-Dummys (10, 11, 12) und/oder einen Verformungsgrad des Batteriezellen-Dummys (10, 11, 12) umfassen.

3. Regelungssystem für ein Batterieherstellungsverfahren nach Anspruch 2, wobei der Batteriezellen-Dummy (10, 11, 12) wenigstens eines der Folgenden umfasst:
einen Drucksensor (110), der dazu ausgelegt ist, den auf den Batteriezellen-Dummy (10, 11, 12) ausgeübten Druck zu messen;
einen Temperatursensor (120), der dazu ausgelegt ist, die interne oder externe Temperatur des Batteriezellen-Dummys (10, 11, 12) zu erfassen;
einen Gasvolumensensor (130), der dazu ausgelegt ist, das interne Gasvolumen des Batteriezellen-Dummys (10, 11, 12) zu messen; und
einen Dehnungsmessstreifen (141, 142, 143, 144, 145), der dazu ausgelegt ist, eine Verformung des Batteriezellen-Dummys (10, 11, 12) zu erfassen.

4. Regelungssystem für ein Batterieherstellungsverfahren nach Anspruch 3, wobei der Drucksensor (110) und der Temperatursensor (120) Pad-Typ-Sensoren sind, die in dem Batteriezellen-Dummy (10, 11, 12) enthalten sind, und
der Dehnungsmessstreifen ein Film-Typ-Sensor (141, 142, 143, 144, 145) ist, der an einer Oberfläche des Batteriezellen-Dummys (10, 11, 12) angebracht ist.

5. Regelungssystem für ein Batterieherstellungsverfahren nach Anspruch 1, wobei die Steuerung (20) ferner dazu ausgelegt ist, die wenigstens eine Prozessvariable basierend auf den Daten, die unter Verwendung des Batteriezellen-Dummys (10, 11, 12) gesammelt werden, zu optimieren.

6. Regelungssystem für ein Batterieherstellungsverfahren nach Anspruch 5, wobei die wenigstens eine Prozessvariable eine Einstellung einer Druckbeaufschlagungsausrüstung und/oder eine Kammerinnentemperatur und/oder eine Batteriespeicherdauer und/oder eine Batterielade-/- entladebedingung umfasst.

7. Regelungssystem für ein Batterieherstellungsverfahren nach Anspruch 5, wobei die Steuerung (20) ferner dazu ausgelegt ist, basierend auf einer Differenz zwischen den Daten, die unter Verwendung des Batteriezellen-Dummys (10, 11, 12) gesammelt werden, und den zuvor gespeicherten Referenzdaten eine Warnmeldung an einen Benutzer zu übermitteln.

8. Regelungsverfahren für ein Batterieherstellungsverfahren, umfassend:
Sammeln (S310) von Daten bezüglich eines Batterieherstellungsverfahrens (30) unter Verwendung eines Batteriezellen-Dummys (10, 11, 12); und
Steuern wenigstens einer Prozessvariablen, die sich auf das Batterieherstellungsverfahren (30) bezieht, basierend auf den Daten bezüglich des Batterieherstellungsverfahrens (30), die unter Verwendung des Batteriezellen-Dummys (10, 11, 12) gesammelt werden (S310).

9. Regelungsverfahren für ein Batterieherstellungsverfahren nach Anspruch 8, wobei die Daten bezüglich des Batterieherstellungsverfahrens (30) einen Druck, der auf den Batteriezellen-Dummy (10, 11, 12) ausgeübt wird, eine interne oder externe Temperatur des Batteriezellen-Dummys (10, 11, 12), ein internes Gasvolumen des Batteriezellen-Dummys (10, 11, 12) und/oder einen Verformungsgrad des Batteriezellen-Dummys (10, 11, 12) umfassen.

10. Regelungsverfahren für ein Batterieherstellungsverfahren nach Anspruch 9, wobei das Sammeln (S310, S410) der Daten bezüglich des Batterieherstellungsverfahrens (30) unter Verwendung des Batteriezellen-Dummys (10, 11, 12) Folgendes umfasst:
Messen des Drucks (S311), der auf den Batteriezellen-Dummy (10, 11, 12) ausgeübt wird;
Erfassen der internen oder externen Temperatur (S312) des Batteriezellen-Dummys (10, 11, 12);
Messen des internen Gasvolumens (S313) des Batteriezellen-Dummys (10, 11, 12); und
Erfassen einer Verformung (S314) des Batteriezellen-Dummys (10, 11, 12).

11. Regelungsverfahren für ein Batterieherstellungsverfahren nach Anspruch 10, wobei das Messen des Drucks (S311), das Erfassen der Temperatur (S312) und/oder das Messen des internen Gasvolumens (S313) unter Verwendung eines Pad-Typ-Sensors (110, 120, 130) durchgeführt wird, der in dem Batteriezellen-Dummy (10, 11, 12) enthalten ist, und
das Erfassen der Verformung (S314) des Batteriezellen-Dummys (10, 11, 12) unter Verwendung eines Film-Typ-Sensors (141, 142, 143, 144, 145) durchgeführt wird, der an einer Oberfläche des Batteriezellen-Dummys (10, 11, 12) angebracht ist.

12. Regelungsverfahren für ein Batterieherstellungsverfahren nach Anspruch 8, wobei das Steuern (S320) der wenigstens einen Prozessvariablen das Optimieren der wenigstens einen Prozessvariablen basierend auf den Daten umfasst, die unter Verwendung des Batteriezellen-Dummys (10, 11, 12) gesammelt werden (S310).

13. Regelungsverfahren für ein Batterieherstellungsverfahren nach Anspruch 12, wobei die wenigstens eine Prozessvariable eine Einstellung einer Druckbeaufschlagungsausrüstung und/oder eine Kammerinnentemperatur und/oder eine Batteriespeicherdauer und/oder eine Batterielade-/- entladebedingung umfasst.

14. Regelungsverfahren für ein Batterieherstellungsverfahren nach Anspruch 12, ferner umfassend das Übermitteln (S420) einer Warnmeldung an einen Benutzer basierend auf einer Differenz zwischen den Daten, die unter Verwendung des Batteriezellen-Dummys (10, 11, 12) gesammelt werden (S310, S410), und den zuvor gespeicherten Referenzdaten.

## Revendications

1. Système de gestion de processus de fabrication de batterie comportant :
un élément factice de batterie (10, 11, 12) configuré pour obtenir des données se rapportant à un processus de fabrication de batterie ; et
un contrôleur (20) configuré pour commander au moins une variable du processus liée au processus de fabrication de batterie (30) sur la base des données se rapportant au processus de fabrication de batterie (30), données qui ont été obtenues à l'aide de l'élément factice de batterie (10, 11, 12).

2. Système de gestion de processus de fabrication de batterie selon la revendication 1, dans lequel les données se rapportant au processus de fabrication de batterie (30) comportent au moins l'un parmi une pression appliquée à l'élément factice de batterie (10, 11, 12), une température interne ou externe de l'élément factice de batterie (10, 11, 12), un volume de gaz interne de l'élément factice de batterie (10, 11, 12) et un niveau de déformation de l'élément factice de batterie (10, 11, 12).

3. Système de gestion de processus de fabrication de batterie selon la revendication 2, dans lequel l'élément factice de batterie (10, 11, 12) comporte au moins l'un parmi :
un capteur de pression (110) configuré pour mesurer la pression appliquée à l'élément factice de batterie (10, 11, 12) ;
un capteur de température (120) configuré pour détecter la température interne ou externe de l'élément factice de batterie (10, 11, 12) ;
un capteur de volume de gaz (130) configuré pour mesurer le volume de gaz interne de l'élément factice de batterie (10, 11, 12) ; et
une jauge de déformation (141, 142, 143, 144, 145) configurée pour détecter la déformation de l'élément factice de batterie (10, 11, 12).

4. Système de gestion de processus de fabrication de batterie selon la revendication 3, dans lequel le capteur de pression (110) et le capteur de température (120) sont des capteurs de type à coussinet inclus dans l'élément factice de batterie (10, 11, 12), et
la jauge de déformation est un capteur de type à film (141, 142, 143, 144, 145) fixé sur une surface de l'élément factice de batterie (10, 11, 12).

5. Système de gestion de processus de fabrication de batterie selon la revendication 1, dans lequel le contrôleur (20) est par ailleurs configuré pour optimiser ladite au moins une variable du processus sur la base des données qui ont été obtenues à l'aide de l'élément factice de batterie (10, 11, 12).

6. Système de gestion de processus de fabrication de batterie selon la revendication 5, dans lequel ladite au moins une variable du processus comporte au moins l'un parmi les réglages d'un équipement de pressurisation, d'une température interne de chambre, d'une période de stockage de batterie et d'un état de charge/décharge de batterie.

7. Système de gestion de processus de fabrication de batterie selon la revendication 5, dans lequel le contrôleur (20) est par ailleurs configuré pour transmettre un message d'alerte à un utilisateur sur la base d'une différence entre les données qui ont été obtenues à l'aide de l'élément factice de batterie (10, 11, 12) et les données de référence précédemment stockées.

8. Procédé de gestion de processus de fabrication de batterie comportant les étapes consistant à :
obtenir (S310) des données se rapportant à un processus de fabrication de batterie (30) à l'aide d'un l'élément factice de batterie (10, 11, 12) ; et
commander au moins une variable du processus liée au processus de fabrication de batterie (30) sur la base des données se rapportant au processus de fabrication de batterie (30), données qui ont été obtenues (S310) à l'aide de l'élément factice de batterie (10, 11, 12).

9. Procédé de gestion de processus de fabrication de batterie selon la revendication 8, dans lequel les données se rapportant au processus de fabrication de batterie (30) comportent au moins l'un parmi une pression appliquée à l'élément factice de batterie (10, 11, 12), une température interne ou externe de l'élément factice de batterie (10, 11, 12), un volume de gaz interne de l'élément factice de batterie (10, 11, 12) et un niveau de déformation de l'élément factice de batterie (10, 11, 12).

10. Procédé de gestion de processus de fabrication de batterie selon la revendication 9, dans lequel l'étape consistant à obtenir (S310, S410) des données se rapportant au processus de fabrication de batterie (30) à l'aide de l'élément factice de batterie (10, 11, 12) comporte les étapes consistant à :
mesurer la pression (S311) appliquée à l'élément factice de batterie (10, 11, 12) ;
détecter la température interne ou externe (S312) de l'élément factice de batterie (10, 11, 12) ;
mesurer le volume de gaz interne (S313) de l'élément factice de batterie (10, 11, 12) ; et
détecter la déformation (S314) de l'élément factice de batterie (10, 11, 12).

11. Procédé de gestion de processus de fabrication de batterie selon la revendication 10, dans lequel au moins l'une parmi les étapes consistant à mesurer la pression (S311), à détecter la température (S312), et à mesurer le volume de gaz interne (S313) est effectuée en utilisant un capteur de type à coussinet (110, 120, 130) inclus dans l'élément factice de batterie (10, 11, 12), et
l'étape consistant à détecter la déformation (S314) de l'élément factice de batterie (10, 11, 12) est effectuée au moyen d'un capteur de type à film (141, 142, 143, 144, 145) fixé sur une surface de l'élément factice de batterie (10, 11, 12).

12. Procédé de gestion de processus de fabrication de batterie selon la revendication 8, dans lequel l'étape consistant à commander (S320) ladite au moins une variable du processus comporte l'étape consistant à optimiser ladite au moins une variable du processus sur la base des données qui ont été obtenues (S310) à l'aide de l'élément factice de batterie (10, 11, 12).

13. Procédé de gestion de processus de fabrication de batterie selon la revendication 12, dans lequel ladite au moins une variable du processus comporte au moins l'un parmi les réglages d'un équipement de pressurisation, d'une température interne de chambre, d'une période de stockage de batterie et d'un état de charge/décharge de batterie.

14. Procédé de gestion de processus de fabrication de batterie selon la revendication 12, comportant par ailleurs l'étape consistant à transmettre (S420) un message d'alerte à un utilisateur sur la base d'une différence entre les données qui ont été obtenues (S310, S410) à l'aide de l'élément factice de batterie (10, 11, 12) et les données de référence précédemment stockées.
